# EUROPEAN PATENT APPLICATION

(11) **EP 2 779 419 A2**
(43) Date of publication of application: **17.09.2014**
(21) Application number: 14159014.1
(22) Date of filing: 12.03.2014
(51) Int. Cl.: H02P 8/34

(54) **Motor Control Apparatus, Motor Control System and Image Forming Apparatus**

(30) Priority: 14.03.2013 JP 2013052517; 14.03.2013 JP 2013052518
(71) Applicant: Ricoh Company, Ltd., Tokyo 143-8555 (JP)
(72) Inventor: Watahiki, Tatsuya, Tokyo, 143-8555 (JP); Ishizuka, Natsuko, Tokyo, 143-8555 (JP)
(74) Representative: Schwabe - Sandmair - Marx

(57) **Abstract**

A motor control apparatus controls driving a direct current motor according to a drive condition set by a stepping motor control unit. The motor control apparatus includes a storage unit in which the drive condition is written by the stepping motor control unit; and a direct current motor control unit that reads the drive condition from the storage unit and controls driving the direct current motor based on the drive condition.

## Description

### BACKGROUND OF THE INVENTION

### 1. Field of the Invention

The disclosures herein generally relate to a motor control apparatus, a motor control system and an image forming apparatus.

### 2. Description of the Related Art

Stepping motors (STM), which can control rotational positions precisely, are widely used in various devices. However, due to an overload or a sudden change in velocity in the stepping motor, a phenomenon called "step-out", in which a synchronization of a control signal and a rotation of the motor is lost, may occur. For this reason, stepping motors are configured so that an amount of electricity greater than an intrinsically required value is supplied in order to generate a greater torque than the expected load torque. Accordingly, there is a problem whereas stepping motors are inefficient with electricity, i.e. the stepping motors consume great amounts of electricity.

In order to reduce power consumption, stepping motors are being replaced by, for example, DC (direct current) motors, such as brushless motors. In the DC motor, a generated torque is proportional to a drive current, and by controlling the generated torque in response to a load torque, power consumption can be reduced, compared with the stepping motor.

Japanese Published Patent Application No. 2011-114951 discloses a motor control apparatus, which converts a control signal for a stepping motor into a control signal for a DC motor, and replaces the stepping motor by the DC motor.

However, in the motor control apparatus disclosed in Japanese Published Patent Application No. 2011-114951, a pulse rate signal peculiar to the stepping motor is required to be adjusted so as to respond to the control of the DC motor according to a type of excitation, a resolution, a gear ratio to a rotated body, or the like. Accordingly, the replacement of the stepping motor by the DC motor may require a complicated process. Moreover, the hardware, in which the motor control apparatus is replaced by the stepping motor, may have a variety of configurations, and may not operate according to the setup of the motor control apparatus.

### SUMMARY OF THE INVENTION

In one embodiment, a motor control apparatus, which controls driving a direct current motor according to a drive condition set by a stepping motor control unit, includes a storage unit in which the drive condition is written by the stepping motor control unit; and a direct current motor control unit that reads the drive condition from the storage unit and controls driving the direct current motor based on the drive condition.

In another embodiment, a motor control system includes a direct current motor; and a motor control apparatus, which controls driving the direct current motor according to a drive condition set by a stepping motor control unit. The motor control apparatus includes a storage unit in which the drive condition is written by the stepping motor control unit; and a direct current motor control unit that reads the drive condition from the storage unit and controls driving the direct current motor based on the drive condition.

In yet another embodiment, an image forming apparatus includes an image forming unit that forms an image on a recording medium based on image data; and a motor control apparatus, which controls driving a direct current motor according to a drive condition set by a stepping motor control unit. The motor control apparatus includes a storage unit in which the drive condition is written by the stepping motor control unit; and a direct current motor control unit that reads the drive condition from the storage unit and controls driving the direct current motor based on the drive condition.

According to the embodiments of the present invention, a motor control apparatus is provided that facilitates easy replacement of a stepping motor by a DC motor, and which can operate with a variety of hardware.

### BRIEF DESCRIPTION OF THE DRAWINGS

Other objects and further features of embodiments will be apparent from the following detailed description when read in conjunction with the accompanying drawings, in which:
Fig. 1 is a diagram schematically illustrating an example of a configuration of an image forming apparatus according to a first embodiment;
Fig. 2 is a diagram illustrating an example of a functional configuration of the image forming apparatus according to the first embodiment;
Fig. 3 is a diagram illustrating an example of a configuration that controls driving an STM (stepping motor) by an STM control unit;
Fig. 4 is a diagram illustrating an example of a motor control system according to the first embodiment;
Fig. 5 is a diagram illustrating an example of a configuration of a register defined in a RAM (random access memory) according to the first embodiment;
Fig. 6 is a flowchart illustrating an example of a procedure of driving a motor in the STM control unit according to the first embodiment;
Fig. 7 is a flowchart illustrating an example of a procedure of driving the motor in the motor control apparatus according to the first embodiment;
Fig. 8 is a flowchart illustrating an example of a procedure of driving a motor in the STM control unit according to a variation of the first embodiment;
Fig. 9 is a flowchart illustrating an example of a procedure of driving the motor in the motor control apparatus according to the variation of the first embodiment;
Fig. 10 is a diagram illustrating an example of a motor control system according to a second embodiment;
Fig. 11 is a diagram illustrating an example of a configuration of a register defined in the RAM according to the second embodiment; and
Fig. 12 is a flowchart illustrating an example of a procedure of controlling a motor according to the second embodiment.

### DESCRIPTION OF THE PREFERRED EMBODIMENTS

In the following, embodiments of the present invention will be described with reference to the accompanying drawings. In the specification and the drawings, the same reference sign is given to substantially the same or corresponding members or parts, and redundant explanation will therefore be omitted.

In the following, a motor control apparatus and a motor control system will be described, by which a stepping motor can be replaced by a DC motor, such as a brushless DC motor. In the following embodiments, an example of replacing a stepping motor located in an image forming apparatus by a DC motor will be explained. However, the present invention is not limited to the example, and can be applied also to a variety of apparatuses or devices with stepping motors, other than the image forming apparatus.

### [First embodiment]

### <Configuration of image forming apparatus>

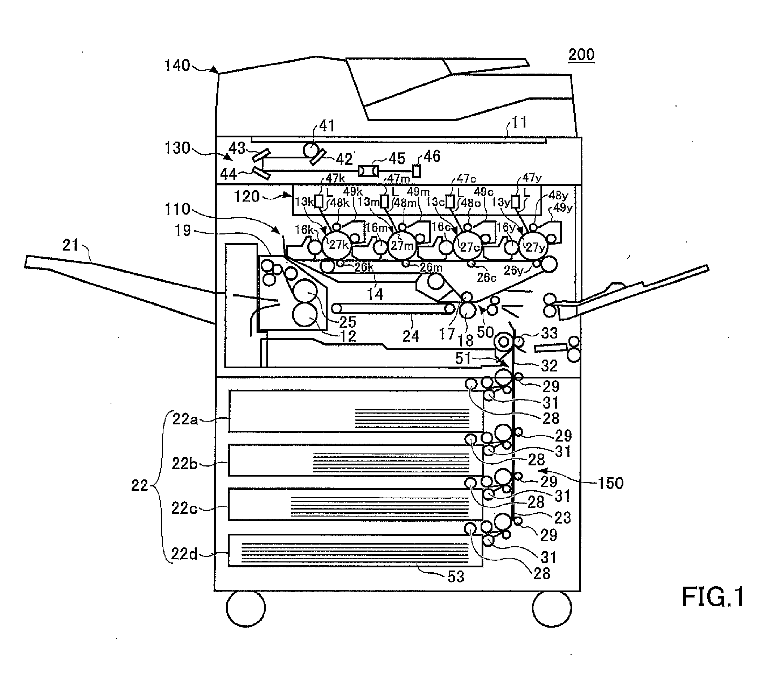

Fig. 1 is a diagram schematically illustrating an example of a configuration of an image forming apparatus 200 according to a first embodiment.

As shown in Fig. 1, the image forming apparatus 200 includes an automatic document feeder (ADF) 140, an image readout unit 130, an image forming unit 110, a writing unit 120 and a paper feed unit 150.

The ADF 140 transports manuscripts placed on a manuscript feed base one by one onto a contact glass 11, and ejects the manuscripts to a receiving tray after image data are read out.

The image readout unit 130 includes the contact glass 11, on which a manuscript is placed, an exposure lamp 41, a first mirror 42, a second mirror 43, a third mirror 44, a lens 45 and a CCD (Charge-Coupled Device) 46. The exposure lamp 41, the first mirror 42, the second mirror 43 and the third mirror 44 scans the manuscript while moving at a constant velocity. A reflected light from the manuscript forms an image on a light receiving surface of the CCD 46, and a photoelectric conversion is performed.

For the image data, obtained by the photoelectric conversion at the CCD 46, various image processes are performed, such as gamma correction, color conversion, image separation, gray scale correction or the like, by an image processing circuit, which is not shown, after an A/D (analog-to-digital) conversion by the image processing circuit.

The writing unit 120 includes exposure devices 47y, 47c, 47m and 47k that form electrostatic latent images of yellow (Y), cyan (C), magenta (M) and black (k), respectively. When a user instructs to make a copy of an image of a manuscript or to print the image, the writing unit 120 forms electrostatic latent images corresponding to the image on photoconductive drums of respective colors.

In the image forming apparatus 200, four photoreceptor units 13y, 13c, 13m and 13k, on which toner images of respective colors are formed, are arranged along a transportation direction of an intermediate transfer belt 14. As shown in Fig. 1, the photoreceptor units 13y, 13c, 13m and 13k includes photoreceptor drums 27y, 27c, 27m and 27k, charging devices 48y, 48c, 48m and 48k, developing devices 16y, 16c, 16m and 16k, and cleaning devices 49y, 49c, 49m and 49k, respectively. In the following explanation, characters in the reference signs, which represent colors, i.e. "y", "c", "m" and "k", will be omitted.

The exposure device 47 in the writing unit 120 exposes, for example, by a LED writing method using a light emitting diode (LED) array and a lens array. The exposure device 47 emits the LED according to image data of each color obtained by the photoelectric conversion, and forms an electrostatic latent image on the photoreceptor drum 27.

In the developing device 16, a developing roller, which supports a developing agent and rotates, supplies toner to the electrostatic latent image formed on the photoreceptor drum 27, and forms toner images of each color.

The toner images of each color formed on the photoreceptor drum 27, at a primary transfer position where the photoreceptor drum 27 contacts the intermediate transfer belt 14, are transferred onto the intermediate transfer belt 14 overlap other toner images.

At a position which opposes the photoreceptor drum 27, an intermediate transfer roller 26 is provided. Each intermediate transfer roller 26 abuts the inner periphery of the intermediate transfer belt 14 and makes the intermediate transfer belt contact the surface of each of the photoreceptors. A voltage is applied on the intermediate transfer roller 26, and an intermediate transfer electric field is formed in order to transfer the toner image on the photoreceptor drum 27 onto the intermediate transfer belt 14. According to the intermediate transfer electric field, the toner image is transferred onto the intermediate transfer belt 14. The toner images of respective colors are superimposed each other and transferred, and a toner image of full color is formed on the intermediate transfer belt 14.

At a timing when the toner image formed on the intermediate transfer belt 14 reaches the position of a secondary transfer roller 18, a recording paper 53 is transported and fed so as to arrive at a secondary transfer position 50 between the secondary transfer roller 18 and a repulsion roller 17, and the toner image is transferred secondarily to the recording paper 53.

The recording paper 53 is fed from any one of the first tray 22a, the second tray 22b, the third tray 22c or the fourth tray 22d. Each of the paper feed trays 22a to 22d in order from the top include a feed roller 28 that picks up a recording paper 53, which is accommodated inside, a separation roller 31 that separates the picked up recording papers 53 individually and sends them to a transportation path 23 and plural pairs of transportation rollers 29.

The pair of transportation rollers 29 sends the recording paper 53 transported from the paper feed tray 22 to the pair of transportation rollers 29 at the latter stage and toward a paper feed path 32 of the image forming unit 110. The recording paper 53 sent to the paper feed path 32, after an edge of the recording paper 53 is detected by a resist sensor 51, abuts a resist roller 33 and temporarily stops. The resist roller 33 sends the held recording paper 53 to the secondary transfer position 50 at a predetermined timing. The predetermined timing is to transport the full color toner image formed on the intermediate transfer belt 14 to the secondary transfer position 50.

At the secondary transfer position 50 between the secondary transfer roller 18 and the repulsion roller 17 the full color toner image on the intermediate transfer belt 14 is transferred to the recording paper 53. Then, the recording paper 53 is transported to a fixing device 19 by a transportation belt 24.

The fixing device 19 includes a heat roller 25 and a pressure roller 12, and fixes the full color toner image on the recording paper 53 by heating and pressurizing the recording paper 53. The recording paper 53, on which the full color toner image is fixed by the fixing device 19, is ejected to the receiving tray 21.

In the image forming apparatus 200, a stepping motor, which will be denoted as "STM" in the following, is used for driving, for example, the feed roller 28, the pair of transportation rollers 29, the photoreceptor drum 27, or the like. These STMs are subjects of the replacement by DC motors, which will be denoted as "DCM" in the following. The DCM, by which the STM is replaced, is, for example, a DC motor with brush, a brushless DC motor, or the like.

In the present embodiment, as the image forming apparatus 200, the image forming apparatus is exemplified, which forms an image on the recording paper 53 by the electrophotographic method. However, the present invention is not limited to the example. An image forming apparatus forming an image by other image forming methods, such as the ink-jet method, which forms an image by discharging ink droplets, may be used.

### <Hardware configuration of image forming apparatus>

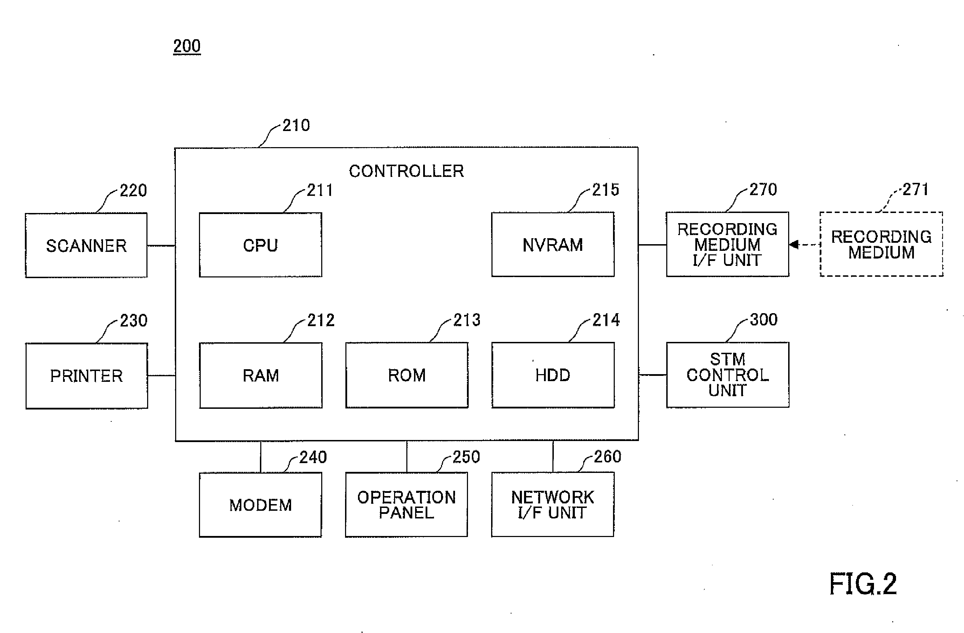

Fig. 2 is a diagram illustrating an example of a hardware configuration of the image forming apparatus 200 according to the first embodiment.

As shown in Fig. 2, the image forming apparatus 200 includes a controller 210, a scanner 220, a printer 230, a modem 240, an operation panel 250, a network I/F unit 260, a recording medium I/F unit 270 and an STM control unit 300.

The controller 210 includes a CPU (Central Processing Unit) 211, a RAM (Random Access Memory) 212, a ROM (Read-Only Memory) 213, a HDD (Hard Disk Drive) 214, an NVRAM (Non-Volatile Random Access Memory) 215 or the like. The ROM 213 stores various programs, data used by the program or the like. The RAM 212 is used as a storage region, in which a program is loaded, a work region for the loaded program or the like. The CPU 211 realizes various functions by processing the program loaded in the RAM 212. The HDD 214 stores a program and various data used by the program or the like. The NVRAM 215 stores various setting information or the like.

The scanner 220 is a hardware (image readout unit) that reads out image data from a manuscript. The printer 230 is a hardware (image forming unit) that prints an image on a recording medium. The modem 240 is a hardware that connects the image forming apparatus 200 to a telephone line, and is used for executing transmission/reception of image data by facsimile communication. The operation panel 250 is hardware including an input unit, such as a button, which receives an input from the user, an operation display, such as an electro-luminescence panel having a touch panel function, or the like.

The network I/F unit 260 is hardware that connects the image forming apparatus 200 to a network such as a LAN (Local Area Network). The LAN may be a wired network or may be a wireless network. The recording medium I/F unit 270 is an interface to a recording medium 271. The image forming apparatus 200 can read out data from the recording medium 271 and/or write data into the recording medium 271 via the recording medium I/F unit 270. The recording medium 271 may be a flexible disk, a CD (Compact Disc), a DVD (Digital Versatile Dick), a SD (Secure Digital) memory card, a USB (Universal Serial Bus) memory, or the like.

The STM control unit 300 controls, for example, driving an STM, provided in the image forming apparatus 200, in order to drive a feed roller 28, a pair of transportation rollers 29, a photoreceptor drum 27 or the like.

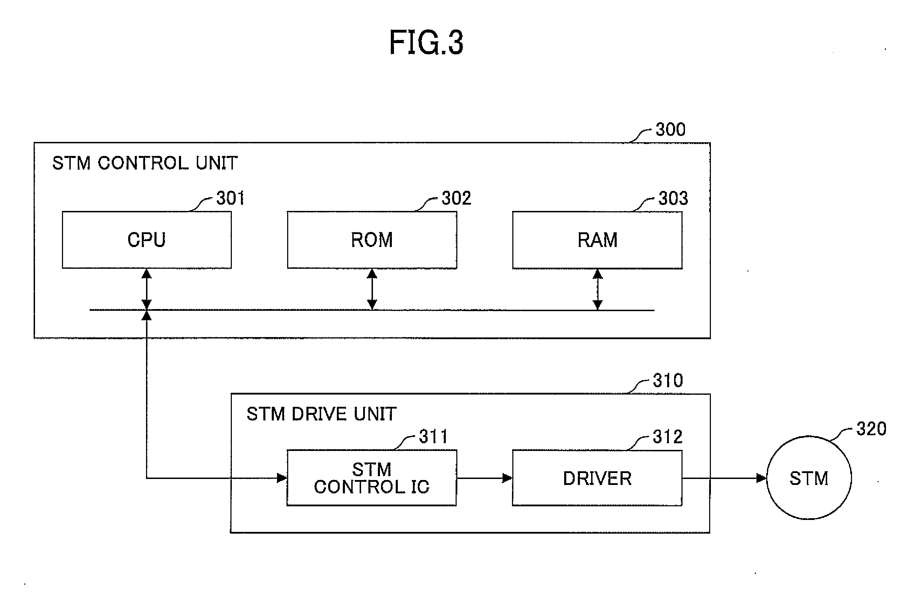

Fig. 3 is a diagram illustrating an example of a configuration that controls driving an STM 320 (stepping motor) by an STM control unit 300. As shown in Fig. 3, the STM control unit 300 can control driving the STM 320 via a STM drive unit.

The STM control unit 300 includes a CPU 301, a ROM 302 and a RAM 303.

The CPU 301 executes calculation for the control or the like based on data stored in the ROM 302 or in the RAM 303. The ROM 302 stores a control program for the STM 320, and data required for driving the motor, such as a target velocity of the STM or the like. The RAM 303 stores data which is temporarily used for the control of the motor.

The STM drive unit 310 includes a STM control IC 311 and a driver 312. The STM drive unit drives the STM 320 in response to a request from the STM control unit 300.

In a register of the STM control IC 311, a drive condition, such as a target rotational velocity, a rotational direction or a slow table of the STM 320, is written by the STM control unit 300. The STM control IC 311 generates a drive signal, based on the drive condition written in the register, and outputs the drive signal to the driver 312. The driver 312 supplies a drive current to the STM 320 based on the drive signal. The STM 320 is driven by the drive current supplied from the driver 312 under the specified drive condition.

### <Configuration of motor control system>

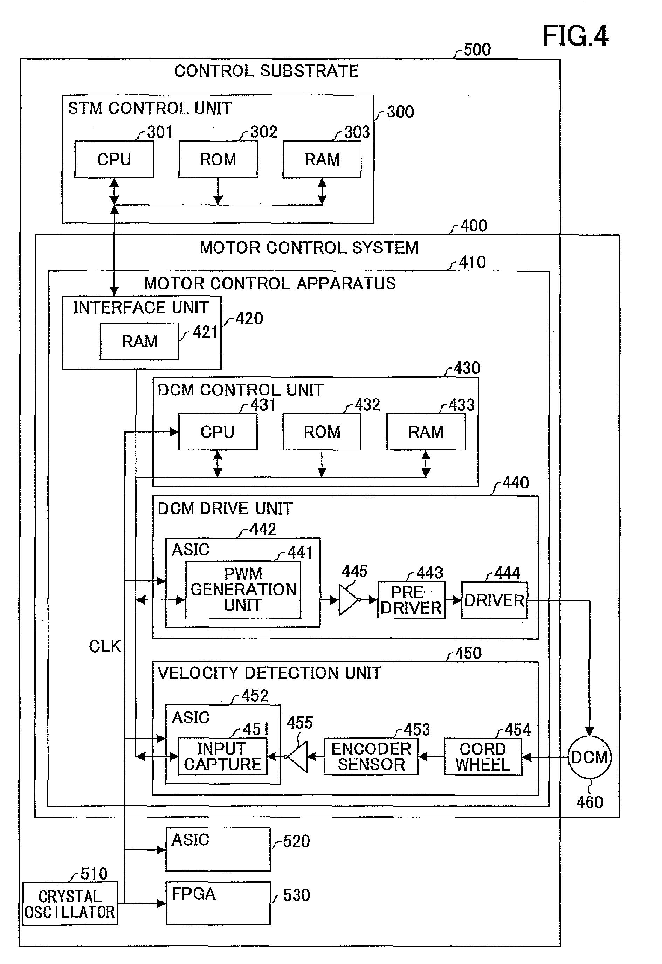

Fig. 4 is a diagram illustrating an example of a motor control system 400 according to the first embodiment.

The motor control system 400 can drive a DCM 460 based on the request from the STM control unit 300. By replacing the STM control unit 310 and the STM 320, as shown in Fig. 3, with the motor control system 400, the replacement of the STM 320 by the DCM 460 is realized.

The motor control system 400 includes a motor control apparatus 410 and the DCM 460. The motor control apparatus 410, by which the STM drive unit 310 is replaced, is implemented in a control substrate 500.

The control substrate 500 may be provided with a STM control unit 300, the motor control apparatus 410, a crystal oscillator 510 as an example of a clock provision unit, an application specific integrated circuit (ASIC) 520 and a field programmable gate array (FPGA) 530.

The motor control apparatus 410 includes an interface unit 420, a DCM control unit 430, a DCM drive unit 440 and a velocity detection unit 450.

The interface unit 420 includes a RAM 421 as an example of a storage unit. The RAM 421 is a dual port RAM, which both the STM control unit 300 and the DCM control unit 430 can access. In the RAM 421, a drive condition for the motor or the like is written by the STM control unit 300. Moreover, hardware setting information may be written in the RAM 421 by the STM control unit 300.

The DCM control unit 430 reads out the drive condition from the RAM 421, and drives the DCM 460 via the DCM drive unit 440 and the velocity detection unit 450, based on the drive condition. Moreover, the DCM control unit 430 may read out the hardware setting information from the RAM 421, and perform various settings for the DCM drive unit 440 and the velocity detection unit 450.

The DCM control unit 430 includes a CPU 431, a ROM 432 and a RAM 433, and sends a drive signal to the DCM drive unit 440 based on the drive condition written in the RAM 421 of the interface unit 420. The CPU 431 executes calculation for the control of the DCM 460 or the like based on data stored in the ROM 432 and the RAM 433. The ROM 432 stores a control program for the DCM 460 or the like. The RAM 433 stores data which is temporarily used for controlling the motor.

The DCM drive unit 440 includes an ASIC 442, which includes a PWM (Pulse Width Modulation) generation circuit 441, a pre-driver 443, and a driver 444. The PWM generation circuit 441 generates a PWM signal based on a drive signal based on the drive signal sent from the DCM control unit 430. The pre-driver 443 generates a signal required for driving the DCM 460 based on the PWM signal. The driver 444 amplifies the signal generated by the pre-driver 443 and outputs the signal to the DCM 460.

The velocity detection unit 450 includes an ASIC 452, which includes an input capture 451, an encoder sensor 453, and a cord wheel 454, and detects a rotational velocity of the DCM 460. To the input capture 451, a pulse signal, output from the encoder sensor 453 which reads the cord wheel 454 provided at a rotational axis of the DCM 460 or the like, and a cycle length of the pulse signal is measured. Meanwhile, although the velocity detection unit 450 detects the rotational velocity of the DCM 460 by using the encoder sensor 453 and the cord wheel 454, the present embodiment is not limited to this. Other velocity detection units such as a magnetic encoder or the like may be used.

The DCM control unit 430 controls driving the DCM 460 by, for example, a feedback control, such as a PID (Proportional-Integral-Derivative) control, based on a target velocity previously set and on an actual velocity of the DCM 460, which is calculated based on the cycle length of the pulse signal output from the velocity detection unit 450.

### (Register configuration of RAM)

The RAM 421 of the interface unit 420 is located at the same address as the STM control IC 311 of the STM control unit 10. The RAM 421 includes a register configuration, which is defined, at least in part, to be the same configuration and arrangement as the register of the STM control IC 311.

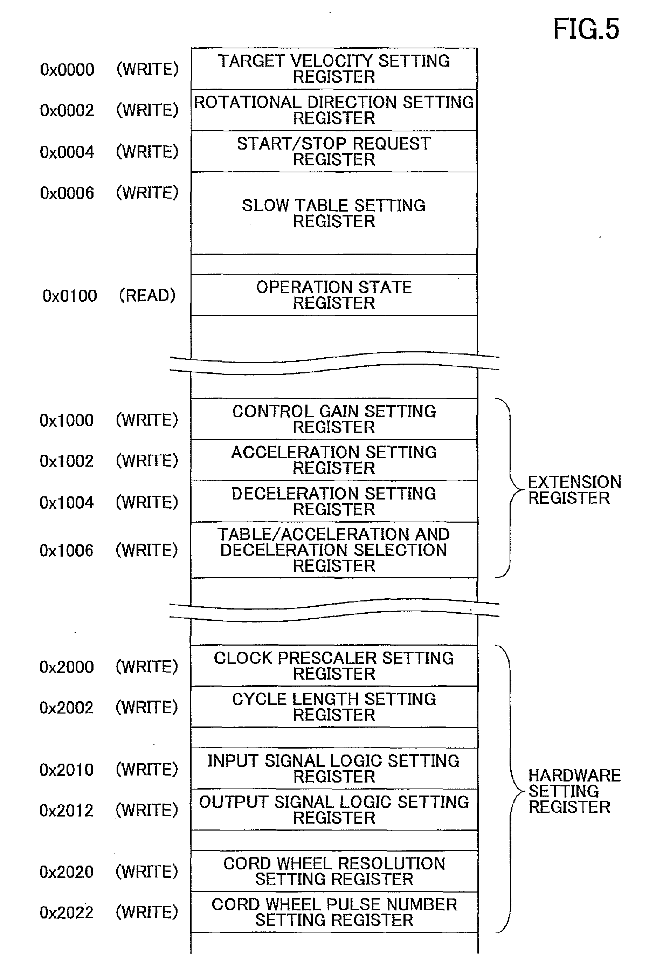

Fig. 5 is a diagram illustrating an example of the configuration of the register defined in the RAM 421. In the RAM 421, respective registers exemplified in Fig. 5 are defined with addresses and read/write directions from the STM control unit 300.

In the RAM 421, register configurations are defined, in which the STM control unit 300 writes the drive condition for a motor, such as a "target velocity setting register", a "rotational direction setting register", a "start/stop request register", a "slow table setting register", an "operation state register" or the like. These register configurations are the same as the register configurations in the STM control IC 311 written by the STM control unit 300. The STM control unit 300 can write the drive condition in the RAM 421, as is the case for writing the drive condition in the register in the STM control IC 311 during driving the STM 320.

The DCM control unit 430 acquires the drive condition from respective registers in the RAM 421, and drives the DCM 460 based on the acquired drive condition. Accordingly, the STM control unit 300 can drive the DCM 460 as is the case for driving the STM 320. The STM drive unit 310 and the STM 320 can be replaced by the motor control system 400. Then, the replacement of the STM 320 by the DCM 460 can be easily realized.

Moreover, in the RAM 421, as shown in Fig. 5, an extension register, such as a "control gain setting register", an "acceleration setting register", a "deceleration setting register", or a "table/acceleration and deceleration selection register", may be defined.

For example, the STM control unit 300 can set a control gain, which is used for controlling the DCM 460 according to the "control gain setting register". The STM control unit 300 can set an acceleration/deceleration profile on accelerating/decelerating the operation of the DCM 460 according to the "acceleration/deceleration setting register". Moreover, the STM control unit can specify which to use out of the slow table and the acceleration/deceleration profile according to the "table/acceleration and deceleration selection register".

As stated above, by defining the extension register in the RAM 421, not only the replacement of the STM 320 by the DCM 460 but also an extension that changes the control condition of the DCM 460 by the STM control unit 300 become possible.

Moreover, in the RAM 421, as a hardware setting register, a register for setting a clock, such as a "clock prescaler setting register" or a "cycle length setting register", may be defined.

The motor control apparatus 410 may be, as shown in Fig. 4, implemented on the control substrate 500 along with the ASIC 520 and FPGA 530 other than the STM control unit 300. To the respective devices implemented on the control substrate 500, clocks distributed from one crystal oscillator 510 provided on the control substrate 500 may be supplied.

The DCM control unit 430 controls driving the DCM 460 by, for example, the PID control, based on the target velocity which is set by the STM control unit 300 and on the rotational velocity of the DCM 460 detected by the velocity detection unit 450. The DCM control unit 430 is required to perform the PID control at a constant control frequency, but the crystal oscillator 510 used as the clock provision unit may not be optimized for the PID control cycle by the DCM control unit 430.

The STM control unit 300, therefore, writes a clock prescaler setting and a cycle length setting corresponding to the crystal oscillator in the "clock prescalar setting register" and the "cycle length setting register" of the RAM 421. The DCM control unit 430 can optimally set the control cycle required for the PID control by reading these setting data from the RAM 421 and by setting the clock.

Moreover, in RAM 421, as shown in Fig. 5, a hardware setting register, which sets an input/output logic, such as an "input signal logic setting register", or an "output signal logic setting register", may be defined.

For example, in the motor control system 400 exemplified in Fig. 4, when the pre-driver 443, the driver 444, the encoder sensor 453, or the like are altered, the logic in a logic circuit 445 in the DCM drive unit 440 and the logic in a logic circuit 450 in the velocity detection unit 450 may invert.

The STM control unit 300, in the "input signal logic setting register" in the RAM 421, sets an input signal logic from the PWM generation circuit 441 in the DCM drive unit 440 to the pre-driver 443 as an example of the drive circuit. Moreover, in the "output signal logic setting register" in the RAM 421, the STM control unit 300 sets an output signal logic from the encoder sensor 453 of the velocity detection unit 450 to the input capture 451.

The DCM control unit 430 may read the hardware setting register in the RAM 421, and set the input signal at the DCM drive unit 440 and the output signal logic at the velocity detection unit 450. Since the DCM control unit 430 sets the logics, even when the pre-driver 443, the driver 444, the encoder sensor 453 or the like is altered, the DCM 460 is controlled normally.

Moreover, in the RAM 421, as shown in Fig. 5, a hardware setting register, which sets the cord wheel of the velocity detection unit 450, such as a "cord wheel resolution setting register", or a "cord wheel pulse number setting register", may be defined.

For example, when a size of the cord wheel 454 is changed according to a mechanical constraint due to a provision position, the number of pulses, per one period, output from the encoder sensor 453, which detects slits of the cord wheel, and a rotation amount of the DCM 460 per one pulse may change. When the cord wheel 454 changes, the number of pulses output from the encoder sensor 453 changes, and the rotational velocity of the DCM 460 may be incorrectly detected. Accordingly, the settings are required to be changed in response to the change in the cord wheel 454.

The STM control unit 300, when the cord wheel 454 is changed, sets the cord wheel 454 in the "cord wheel resolution setting register" and the "cord wheel pulse number setting register" in the RAM 421.

The DCM control unit 430, by reading out the hardware setting register in the RAM 421 and setting the cord wheel 454, can detect the rotational velocity and perform drive control, even when the cord wheel 454 is changed.

As described above, in the RAM 421, as a hardware setting register, for example, a clock setting, an input/output logic setting, a cord wheel setting or the like may be defined. The DCM control unit, by reading the hardware setting register and performing various settings, can control the DCM 460 normally, even when the hardware is changed. Accordingly, the motor control system 400 facilitates the easy replacement of the STM 320 by the DCM 460, and since the setting of the hardware can be changed according to the replacement environment, the motor control system 400 can be applied to a wide variety of apparatuses.

Meanwhile, the register configuration of the RAM 421 may be arbitrarily defined according to the drive condition or the like of the STN 320, which is set by the STM control unit 300. The present invention is not limited to the example shown in Fig. 5. The hardware setting register provided in the RAM 421 may be, for example, at least one of a clock setting, an input/output logic setting and a cord wheel setting. Moreover, the interface unit 420 may be an ASIC or an FPGA, which includes a register having a configuration exemplified in Fig. 5 as an example of a storage unit.

### <Motor drive control process>

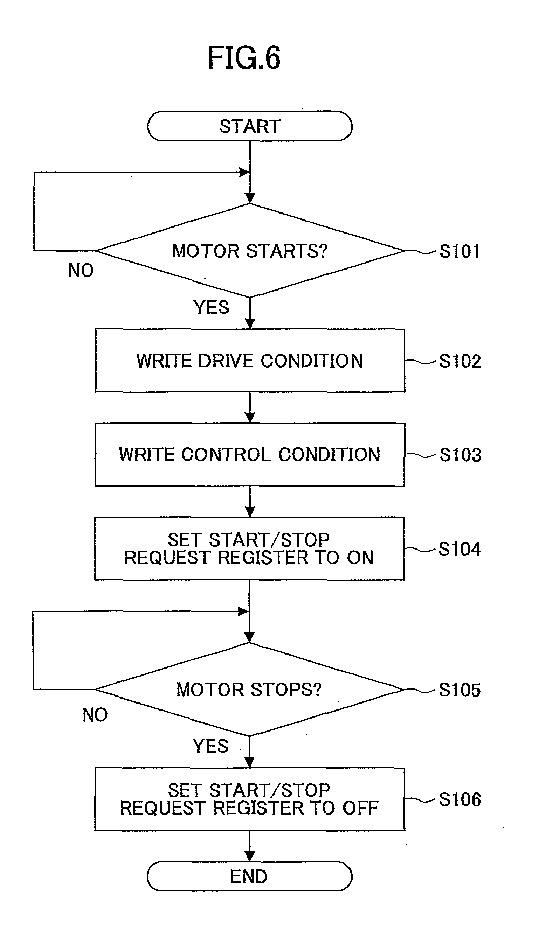

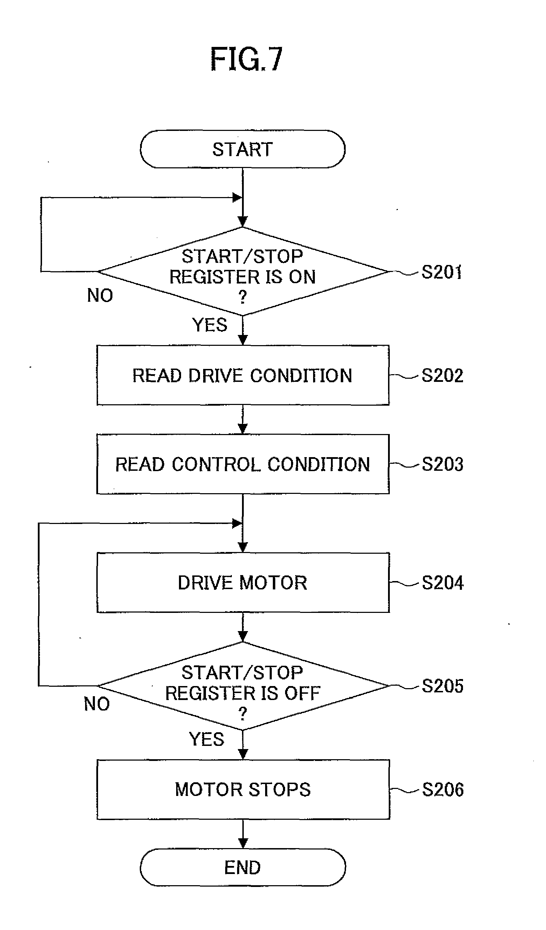

Next, the motor drive process during driving the DCM 460 will be explained based on flowcharts exemplified in Figs. 6 and 7.

Fig. 6 is a flowchart illustrating an example of the motor drive process in the STM control unit 300.

In the case of starting the DCM 460 (step S101 YES), the STM control unit 300 writes the drive condition in the RAM 421 of the interface unit 420 in the motor control apparatus 410 (step S102). Moreover, the control condition is written in the RAM 421 (step S103).

The STM control unit 300 sets, as the drive condition, for example, the target velocity, the direction of rotation, the slow table, or the like, and as the control condition, for example, the control gain, the acceleration, the deceleration, or the like.

Next, the STM control unit 300 sets the "start/stop request register" in the RAM 421 to "ON" (step S104). Afterward, when the DCM stops (step S105 YES), the STM control unit 300 sets the "start/stop request register" in the RAM 421 to "OFF" (step S106), and the process ends.

Fig. 7 is a flowchart illustrating an example of the motor drive process in the motor control apparatus 410.

The DCM control unit 430 checks the register in the RAM 421 at a constant frequency. When the "start/stop request register" is "ON" (step S201, YES), the DCM control unit 430 reads the drive condition from the respective registers in the RAM 421 (step S202). Moreover, the DCM control unit 430 reads the control condition from the respective registers in the RAM 421 (step S203).

Next, the DCM control unit 430 drives the DCM 460, based on the drive condition and the control condition, read from the respective registers in the RAM 421 (step S204).

The DCM control unit 430 checks the register in the RAM 421 at a constant frequency. When the "start/stop request register" is "OFF" (step S205 YES), the DCM control unit stops the DCM 460 (step S206), and the process ends.

As described above, according to the motor control system 400 of the first embodiment, the STM control unit 300 can drive the DCM 460 by the same process as driving the STM 320. When the STM control unit 300 drives the DCM 460, by which the STM 320 is replaced, the STM control unit 300 writes the drive condition in the RAM 421 of the interface unit 420, in the same way as writing the drive condition in the register of the STM control IC 311, and can drive the DCM 460.

Moreover, when the RAM 421 has the extension register, the STM control unit 300, by writing the various control conditions of the DCM 460 in the extension register in the RAM 421, can change settings for the DCM 460.

In this way, according to the motor control system 400 of the first embodiment, the STM 320 can be replaced by the DCM 460 which is driven without changing the STM control unit 300.

### [Variation of first embodiment]

A variation of the first embodiment will be described with reference to the accompanying drawings. Explanation of the same members for parts as those in the variation of the first embodiment, which has already been explained in the first embodiment, will be omitted.

### <Motor drive control process>

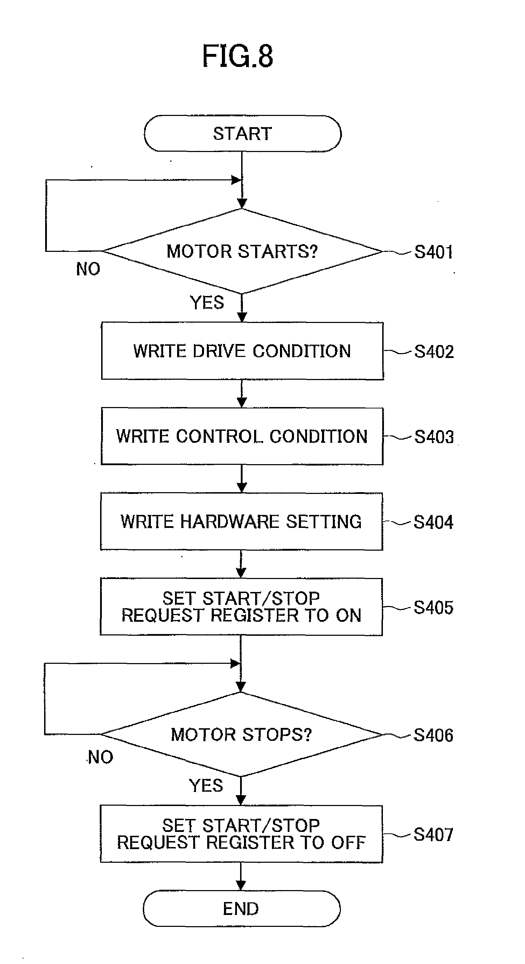

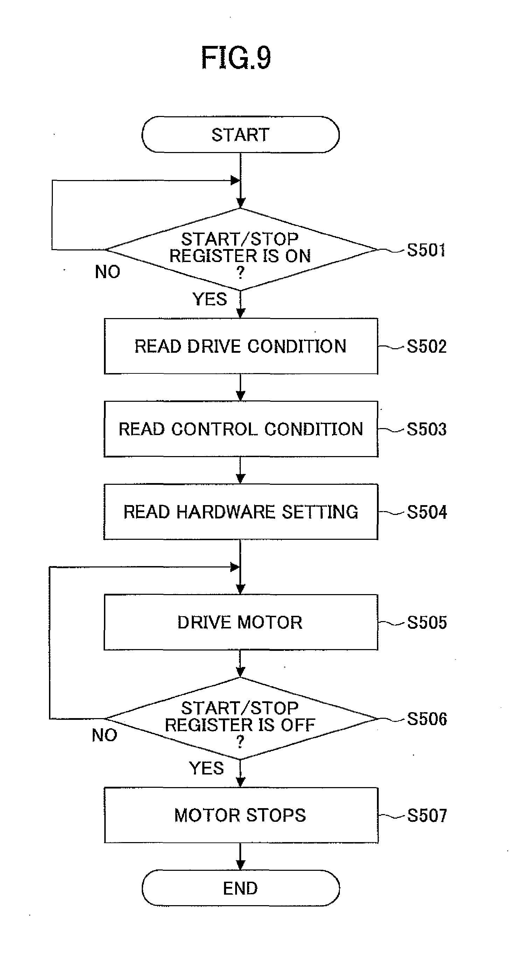

The motor drive process during driving the DCM 460 according to the variation of the S5 will be explained based on flowcharts exemplified in Figs. 8 and 9.

Fig. 8 is a flowchart illustrating an example of the motor drive process in the STM control unit 300.

In the case of starting the DCM 460 (step S401 YES), the STM control unit 300 writes the drive condition in the RAM 421 of the interface unit 420 in the motor control apparatus 410 (step S402). Moreover, the control condition is written in the RAM 421 (step S403). Then, the hardware setting is written in the RAM 421 (step S404).

The STM control unit 300 sets, as the drive condition, for example, the target velocity, the direction of rotation, the slow table, or the like, and as the control condition, for example, the control gain, the acceleration, the deceleration, or the like. Moreover, as the hardware setting, for example, the clock setting, the input/output logic setting, the cord wheel setting, or the like, is set.

Next, the STM control unit 300 sets the "start/stop request register" in the RAM 421 to "ON" (step S405). Afterward, when the DCM stops (step S406 YES), the STM control unit 300 sets the "start/stop request register" in the RAM 421 to "OFF" (step S407), and the process ends.

Fig. 9 is a flowchart illustrating an example of the motor drive process in the motor control apparatus 410.

The DCM control unit 430 checks the register in the RAM 421 at a constant frequency. When the "start/stop request register" is "ON" (step S501, YES), the DCM control unit 430 reads the drive condition from the respective registers in the RAM 421 (step S502). Moreover, the DCM control unit 430 reads the control condition from the respective registers in the RAM 421 (step S503). The DCM control unit 430 reads the hardware setting from the respective registers in the RAM 421 (step S504).

Next, the DCM control unit 430 drives the DCM 460, based on the drive condition, the control condition and the hardware setting, read from the respective registers in the

RAM 421 (step S505).

The DCM control unit 430 checks the register in the RAM 421 at a constant frequency. When the "start/stop request register" is "OFF" (step S506 YES), the DCM control unit stops the DCM 460 (step S507), and the process ends.

As described above, according to the motor control system 400 of the variation of the first embodiment, the STM control unit 300 can drive the DCM 460 by the same process as driving the STM 320. When the STM control unit 300 drives the DCM 460, by which the STM 320 is replaced, the STM control unit 300 writes the drive condition in the RAM 421 of the interface unit 420, in the same way as writing the drive condition in the register of the STM control IC 311, and can drive the DCM 460.

Moreover, since the RAM 421 includes a hardware setting register, the DCM control unit 430 reads the hardware setting, and can set it according to an environment, and facilitates the replacement of the STM 320 by the DCM 460 in various apparatuses.

Furthermore, when the RAM 421 has the extension register, the STM control unit 300, by writing the various control conditions of the DCM 460 in the extension register in the RAM 421, can change settings for the DCM 460.

In this way, according to the motor control system 400 of the variation of the first embodiment, the replacement of the STM 320 by the DCM 460 can be easily performed, and can deal with a variety of hardware.

### [Second embodiment]

Next, a second embodiment will be described with reference to the accompanying drawings. Explanation of the same members for parts as those in the embodiment, which has already been explained, will be omitted.

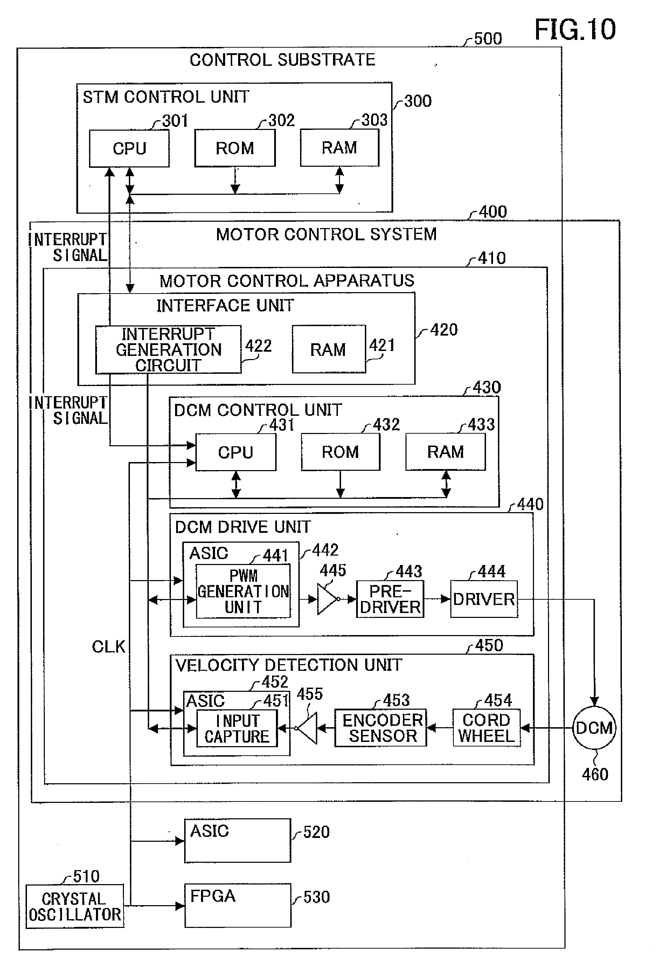

Fig. 10 is a diagram illustrating an example of a motor control system 400 according to the second embodiment. The motor control system 400 according to the second embodiment is different from the first embodiment in that an interrupt generation circuit 422 is provided in the interface unit 420.

The interrupt generation circuit 422 generates an interrupt signal, for example, when any one of the registers in the RAM 421 is written, or when a specific register in the RAM 421 is written.

For example, the interrupt generation circuit 422, when the STM control unit 300 writes the "start/stop request register" in the RAM 421, sends an interrupt signal to the DCM control unit 430. The DCM control unit 430 starts or stops the DCM 460 in response to the interrupt signal.

In this way, since the DCM control unit 430 controls the DCM 460 in response to the interrupt signal, compared with, for example, performing the control by checking the register in the RAM 421 at a polling cycle, responsiveness for controlling the DCM 460 is enhanced. Accordingly, start/stop timings of the DCM 460 can be exactly controlled.

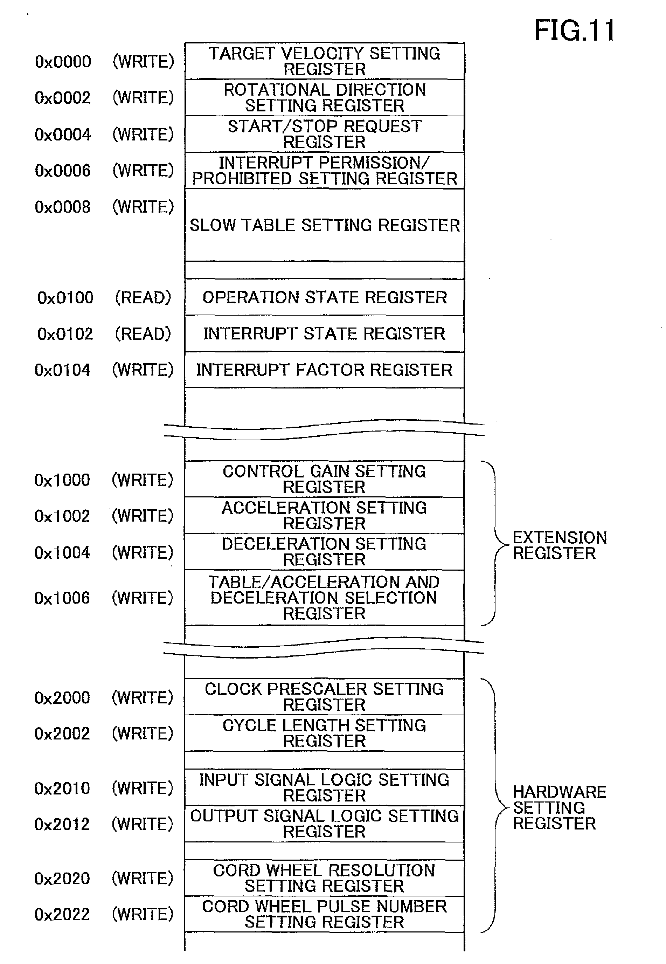

Fig. 11 is a diagram illustrating an example of a register configuration defined in the RAM 421 according to the second embodiment. As show in Fig. 11, in the RAM 421, for example, an "interrupt permission/prohibited setting register", an "interrupt state register", an "interrupt factor register" or the like is defined.

The register configuration in the RAM 421 is not limited to the configuration exemplified in Fig. 11, and may be arbitrarily set. Moreover, the interface unit 420 may be an ASIC or a FPGA, which includes a register having a configuration exemplified in Fig. 11 as an example of a storage unit, and the interrupt generation circuit.

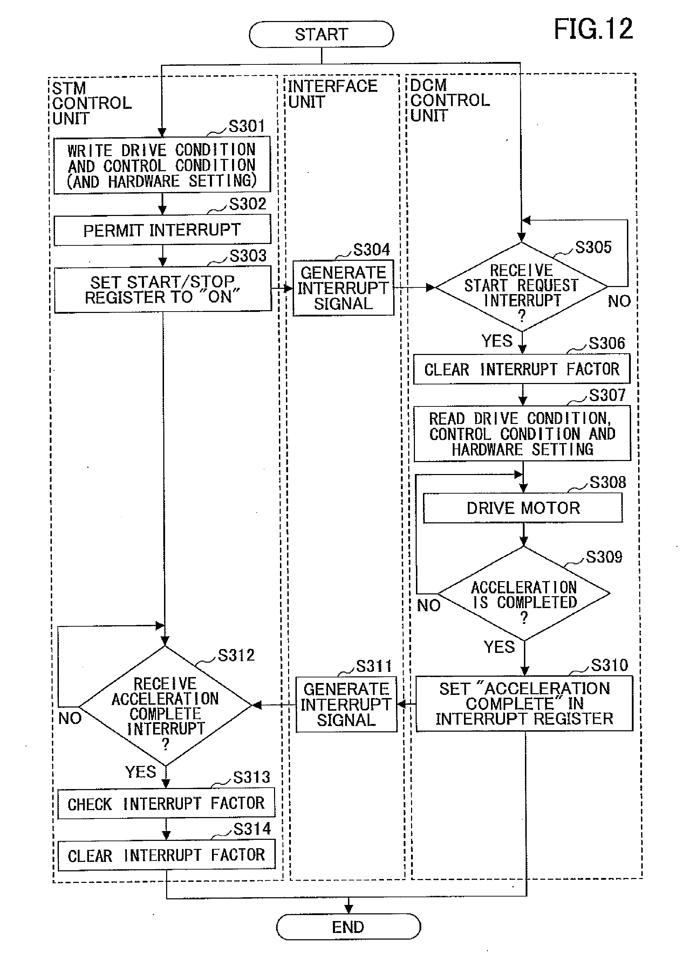

Fig. 12 is a flowchart illustrating an example of a motor control process from start to completion of acceleration for the DCM 460 according to the second embodiment.

At first, the STM control unit 300 writes the drive condition and the control condition in the RAM 421 in the interface unit 420 (step S301). Furthermore, the STM control unit 300, at step S301, may write the hardware setting in the RAM 421 in the interface unit 420. Next, interrupt permission on the completion of acceleration is set in the "interrupt permission/prohibited setting register" in the RAM 421 (step S302), and the "start/stop request register" is set to "ON" (step S303).

In response to the "start/stop request register" in the RAM 421 being set to "ON" by the STM control unit 300, the interrupt generation circuit 422 generates the interrupt signal, and sends the signal to the DCM control unit 430 (step S304).

The DCM control unit 430 waits for the interrupt signal for a start request. When the DCM control unit 430 receives the interrupt signal from the interrupt generation circuit 422 (step S305 YES), the DCM control unit 430 clears the "interrupt factor register" in the RAM 421 (step S306). The DCM control unit 430 reads the drive condition and the control condition (step S307), and drives the DCM 460 based on the drive condition and the control condition (step S308).

Next, the DCM control unit 430, based on a result of detection of the velocity detection unit 450, determines whether the rotational velocity of the DCM 460 reaches the target velocity and the acceleration control completes (step S309). When the DCM control unit 430 determines that the acceleration of the DCM 460 is completed (step S309 YES), the DCM control unit 430 sets "acceleration complete" in the "interrupt factor register" (step S310).

In response to the "interrupt factor register" being set to "acceleration complete" by the DCM control unit 430, the interrupt generation circuit 422 generates an interrupt signal, and sends the signal to the STM control unit 300 (step S311).

The STM control unit 300 waits for the interrupt signal for "acceleration complete". When the STM control unit 300 receives the interrupt signal from the interrupt generation circuit 422 (step S312 YES), the STM control unit 300 checks the interrupt factor (step S313). After checking the interrupt factor, the STM control unit 300 clears the "interrupt factor register" (step S314), and the acceleration control process for the DCM 460 ends.

In this way, since the interrupt generation circuit 422 generates an interrupt signal in response writing to the register in the RAM 421, the DCM control unit 430, for example, can control the timing for starting the DCM 460. Furthermore, the DCM control unit 430 can start the DCM 460 when the STM control unit 300 sets the "start/stop request register" to "ON", without waiting for the polling cycle by the DCM control unit 430, and the DCM control unit 430 can exactly control the timing for starting the DCM 460.

Moreover, the interrupt generation circuit may generate an interrupt signal when the STM control unit 300 sets the "start/stop request register" to "OFF" so that the DCM control unit 430 stops driving the DCM 460. Also in this case, the timing for stopping the DCM 460 by the DCM control unit 430 can be exactly controlled.

As stated above, according to the motor control system 400 of the second embodiment the STM 320 can be replaced by the DCM 460, and, for example, the timing for starting or stopping the DCM 460 can be exactly controlled.

Further, the present invention is not limited to these embodiments, but various variations and modifications may be made without departing from the scope of the present invention.

The present application is based on and claims the benefit of priorities of Japanese Priority Applications No. 2013-052517 filed on March 14, 2013 and No. 2013-052518 filed on March 14, 2013, with the Japanese Patent Office, the entire contents of which are hereby incorporated by reference.

## Claims

1. A motor control apparatus which controls driving a direct current motor according to a drive condition set by a stepping motor control unit, comprising:
a storage unit in which the drive condition is written by the stepping motor control unit; and
a direct current motor control unit that reads the drive condition from the storage unit and controls driving the direct current motor based on the drive condition.

2. The motor control apparatus as claimed in claim 1 wherein the storage unit includes a region in which a control condition of the direct current motor is written by the stepping motor control unit.

3. The motor control apparatus as claimed in claim 1 or 2, further comprising an interrupt signal generation unit that generates an interrupt signal when the stepping motor control unit or the direct current motor control unit performs writing in the storage unit, and sends the interrupt signal to the stepping motor control unit or the direct current motor control unit.

4. The motor control apparatus as claimed in any one of claims 1 to 3, further comprising:
a direct current motor drive unit that is controlled by the direct current motor control unit and drives the direct current motor; and
a velocity detection unit that detects a rotational velocity of the direct current motor,
wherein the direct current motor control unit controls the direct current motor drive unit based on the drive condition and the rotational velocity detected by the velocity detection unit.

5. The motor control apparatus as claimed in any of claims 1 to 4 wherein the storage unit is a random access memory.

6. The motor control apparatus as claimed in any one of claims 1 to 4 wherein the storage unit is provided in an application specific integrated circuit (ASIC) or in a field programmable gate array (FPGA), and is a register configured so that a stored content is rewritable.

7. The motor control apparatus as claimed in one of claims 1 to 6 wherein the direct current motor is a brushless motor.

8. The motor control apparatus as claimed in any one of claims 1 to 7 wherein hardware setting information corresponding to a hardware to be connected is written in the storage unit, and the direct current motor control unit reads the hardware setting information from the storage unit and performs a setting corresponding to the hardware based on the hardware setting information.

9. The motor control apparatus as claimed in claim 8 wherein the hardware setting information includes setting information for a clock which the direct current motor control unit uses.

10. The motor control apparatus as claimed in claim 8 or 9, further comprising a direct current motor drive unit that is controlled by the direct current motor control unit and drives the direct current motor, wherein the hardware setting information includes setting information for an output signal logic to a drive circuit which is provided in the direct current motor drive unit and drives the direct current motor.

11. The motor control apparatus as claimed in any one of claims 8 to 10, further comprising a velocity detection unit that detects a rotational velocity of the direct current motor, based on an output from a detection unit which detects a rotation of the direct current motor, wherein the hardware setting information includes at least one of setting information of an input signal logic from the detection unit and setting information for the detection unit.

12. A motor control system, comprising:
the motor control apparatus as claimed in any one of claims 1 to 11; and
the direct current motor.

13. An image forming apparatus, comprising:
the motor control apparatus as claimed in any one of claims 1 to 11; and
an image forming unit that forms an image on a recording medium based on image data.
